Europäisches Patentamt

European Patent Office

Office européen des brevets

(11) Numéro de publication: **0 001 725**
**B1**

(12) **FASCICULE DE BREVET EUROPEEN**

(21) Numéro de dépôt: **78400094.5**

(22) Date de dépôt: **12.09.78**

(51) Int. Cl.³: **B 62 D 43/04**

(54) **Dispositif de sécurité pour la retenue d'un berceau de roue de secours**

(30) Priorité: **21.10.77 FR 7731707**

(43) Date de publication de la demande:
**02.05.79 Bulletin 79/09**

(45) Mention de la délivrance du brevet:
**20.08.80 Bulletin 80/17**

(84) Etats contractants désignés:
**BE DE GB NL SE**

(56) Documents cités:
**FR - A - 1 551 853**
**FR - A - 2 243 594**

(73) Titulaire: **Regie Nationale des Usines Renault
Boite postale 103 8-10 avenue Emile Zola
F - 92109 Boulogne-Billancourt (FR)**

(72) Inventeur: **Calin, Philippe
21, rue Georges Appollinaire
F - 78760 Pontchartrain (FR)
Faye, Christian
6, rue Corneille
F - 92500 Rueil Malmaison (FR)**

# Dispositif de sécurité pour la retenue d'un berceau de roue de secours

La présente invention, due à la collaboration de Messieurs Philippe CALIN et Christian FAYE, se rapporte à un dispositif de sécurité pour la retenue d'un berceau de roue de secours, verrouillé par ailleurs, sous le plancher d'un véhicule automobile.

Dans un véhicule automobile, il est connu de disposer la roue de secours horizontalement, sous le plancher, et le plus souvent à l'arrière du véhicule, dans un berceau ou panier monté pivotant sous la caisse du véhicule.

Il est connu de prévoir pour ce support un mécanisme de verrouillage ne pouvant être manoeuvré que de l'intérieur du coffre à bagages, par exemple, afin de rendre plus difficile un vol éventuel de la roue de secours.

Ce mécanisme peut être associé soit à un crochet de sécurité indépendant du verrou, de type analogue au crochet de retenue du capot avant d'un véhicule ou bien peut être combiné avec le crochet de sécurité qui lui est intégré.

Relativement à ce dernier type, le brevet français N° 2 243 594 au même nom que celui du présent demandeur, en est un exemple de réalisation.

Cependant, lorsque la sécurité est liée au fonctionnement due verrou, une rupture de ce dernier entraîne la disparition simultanée de la sécurité. La récupération du berceau dans sa chute n'est plus assurée, ce qui peut alors libérer la roue de secours de façon intempestive, au cours du déplacement du véhicule.

Les crochets de sécurité totalement indépendants du mécanisme de verrouillage sont d'un maniement moins commode car il est nécessaire d'agir séparément sur le verrou et sur la sécurité pour libérer le berceau.

D'autre part, lorsque le berceau est relevé et verrouillé sous le plancher du véhicule, le crochet de sécurité reste en place en dessous du berceau en présentant une saillie dangereuse et inesthétique par rapport à la carrosserie.

Le but de l'invention est d'éviter les inconvénients ci-dessus mentionnés et de réaliser un dispositif de sécurité simple et peu coûteux, facilement adaptable aux mécanismes de verrouillage existants et dont le fonctionnement soit lié exclusivement au mouvement du berceau pivotant.

A cet effet, un crochet de retenue du berceau est associé au verrou mais indépendant de son fonctionnement, et est monté pivotant sur une partie fixe de la carrosserie en étant chargé par un ressort de rappel. Conformément à l'invention, le crochet de sécurité est susceptible de s'escamoter sous le plancher par le relevage du berceau à l'aide du verrou.

Pour cela, le berceau pousse contre le profil en forme de came du crochet.

A l'inverse, lorsque le berceau est abaissé soit par action sur le verrou existant à tige filetée, soit par rupture intempestive de ce dernier, le crochet est rappelé automatiquement en position de sécurité par son ressort.

Par ailleurs, l'extrémité du crochet de sécurité présente une palette destiné à entraîner le crochet du verrou.

Ainsi, la seule action manuelle sur le crochet de sécurité libère le verrou simultanément afin de baisser le berceau pour déposer la roue de secours.

De plus, dans le premier temps de la remontée du berceau, celui-ci s'enclenchera automatiquement dans le crochet du verrou entraîné par le crochet de sécurité.

D'autres advantages et particularités de l'invention apparaîtront au cours de la description qui suit d'un mode de réalisation donné à titre d'exemple, en référence au dessin annexé sur lequel:

— les figures 1 et 2 représentent, vue en plan et de dessous, le berceau d'une roue de secours et son mécanisme de verrouillage équipé du crochet de sécurité selon l'invention,

— les figures 3 et 4 sont des vues agrandies du dispositif de verrouillage, identiques aux figures 1 et 2, illustrant le fonctionnement du crochet de sécurité,

— la figure 5 est une vue en perspective éclatée du crochet de sécurité associé au verrou.

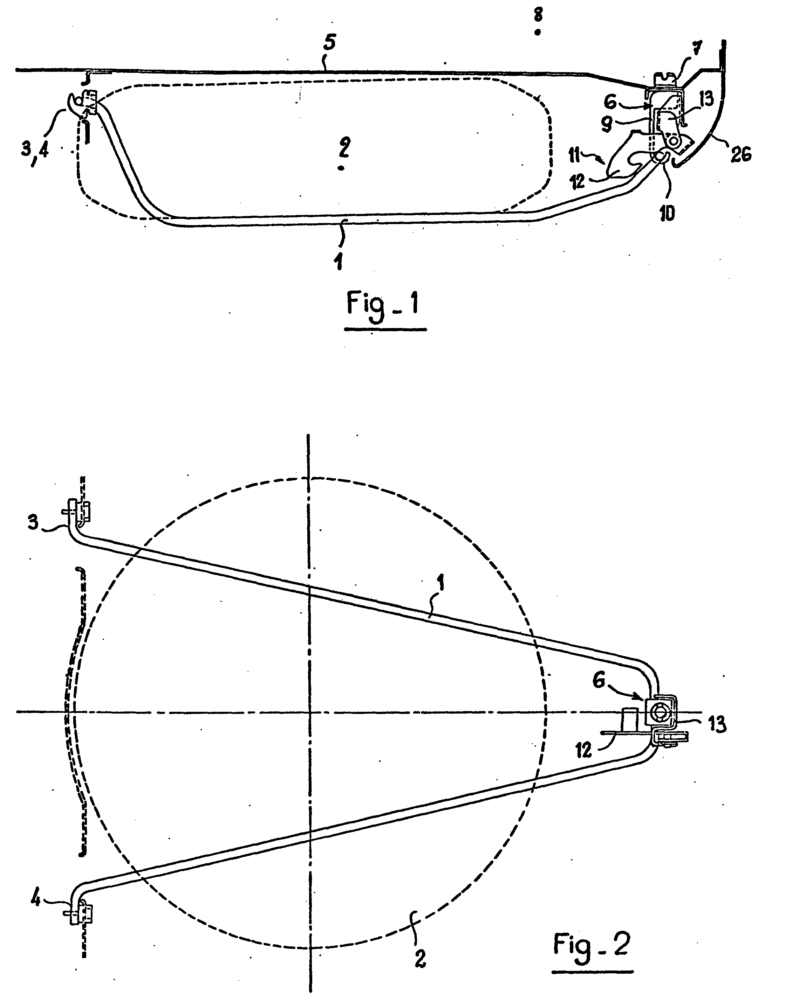

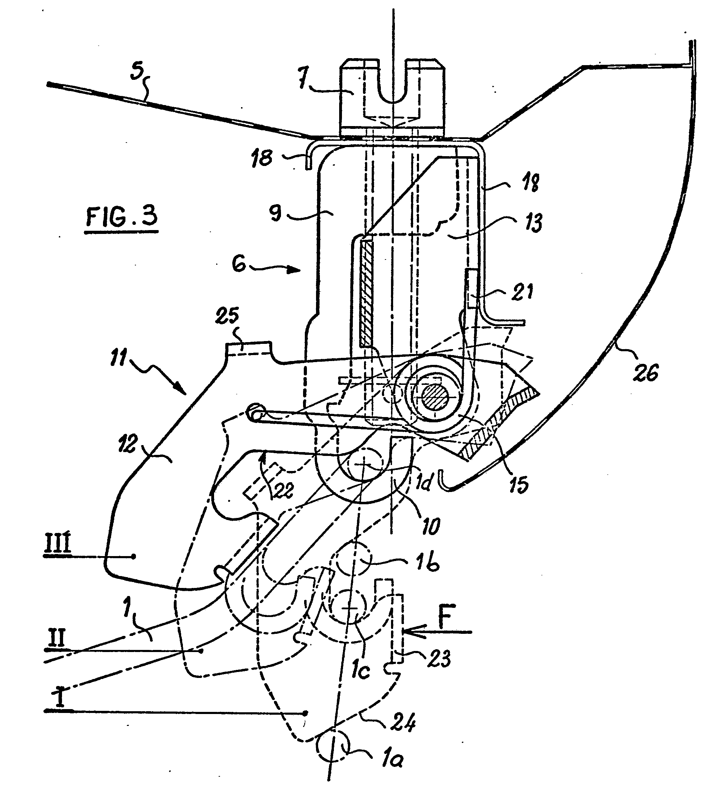

Les figures 1 et 2 montrent clairement l'application envisagée par l'objet de l'invention.

Un berceau 1 de roue de secours 2 est monté pivotant, autour de deux articulations 3, 4, sous le plancher arriére 5 d'un véhicule automobile.

Il peut être abaisé ou remonté à volonté, par action sur un verrou classique 6 comportant une tige filetée 7 traversant le plancher et manoeuvrable à partir du coffre 8 du véhicule, tige déplaçant en translation le corps 9 du verrou se terminant par un crochet 10 qui supporte le berceau 1. par réaction du berceau sur le verrou, ce dernier est donc maintenu en rotation jusqu'au dégagement manuel du berceau, afin de libérer la roue de secours 2.

Conformément à l'invention, le verrou 6 est associé à un dispositif de sécurité 11 formé essentiellement par un crochet 12 escamotable sous le plancher et par son support 13.

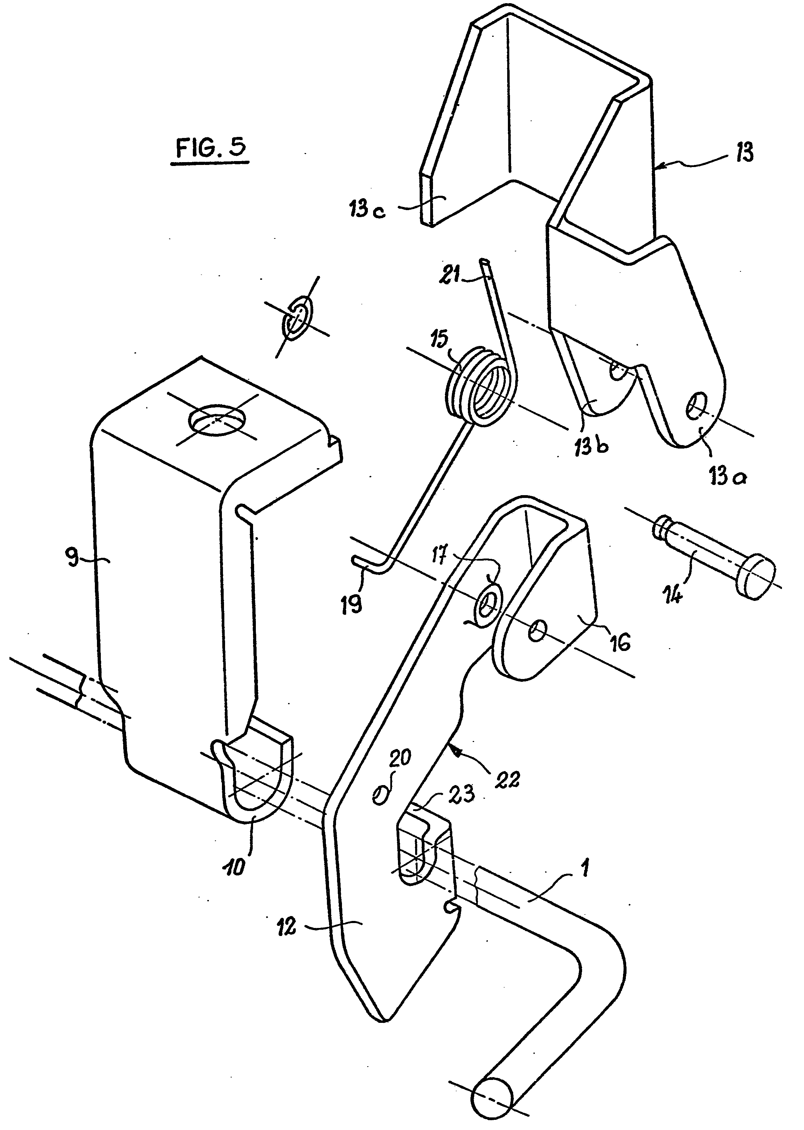

Comme on le voit sur la figure 5, le crochet de sécurité 12 est articulé en chape sur son support 13 par l'intermédiaire d'un axe 14 clipsé entre deux ailes 13a, 13b du support. Ce montage assure la stabilité verticale du crochet.

Un ressort 15 enroulé autour de l'axe 14, assure le rappel du crochet 12 dans la position de sécurité représentée, c'est-à-dire en prise avec la tringle du berceau 1.

Dans le but de faciliter le montage du crochet sur le véhicule, le ressort de rappel 15 est mis en place au préalable dans la chape 16 du crochet et maintenu en position grâce à deux bossages intérieurs 17 centrés sur l'axe.

Le support 13 forme plus précisément une double chape en S.

La première 13a, 13b, on l'a vu, constitue l'articulation du crochet 12, la deuxième forme deux ailes 13b, 13c qui, d'une part, maintiennent en rotation le corps 9 du verrou pour qu'il se présente toujours correctement par rapport au berceau 1 et, d'autre part, le guident en translation.

Il est bien évident que cette partie du support 13 est particulièrement adaptée à la forme du verrou existant et qu'elle pourrait prendre une autre structure selon le verrou utilisé.

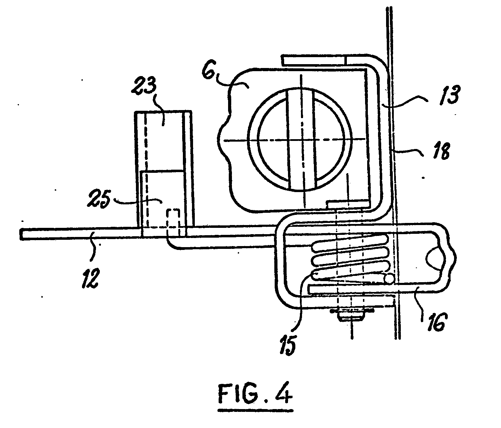

Quoi qu'il en soit, le support est fixé sur un renfort de plancher 18 (figures 1 à 4), par soudage de préférence.

Au montage, une extrémité recourbée 19 du ressort de rappel prendra appui dans un orifice 20 du crochet tandis que l'autre extrémité 21 s'appuiera sur la carrosserie fixe, en l'occurrence le renfort de plancher 18.

Le crochet de sécurité présente un profil intérieur en forme de came 22 destiné à coopérer au cours du relevage avec la tringle du berceau 1.

Par ailleurs, l'extrémité du crochet forme une palette 23 à l'équerre, prévue pour engager l'extrémité en forme de crochet 10 du verrou comme expliqué dans la description suivante du fonctionnement, en référence à la figure 3.

Le berceau 1 étant libéré et abaissé en vue d'un changement de roue par exemple, le verrou 6 et le crochet de sécurité 12 occupent la position I, dite basse, représentée en pointillés.

En relevant manuellement le berceau, ce dernier prend appui en Ia sur le profil inférieur 24 du crochet et l'oblige à basculer dans le sens de la flèche F en entraînant le verrou 6 par l'engagement de la palette 23.

La forme du support 13 autorise justement un léger basculement du verrou, hors des ailes 13b, 13c de la chape, basculement limité par une butée 25 issue du profil extérieur du crochet de sécurité.

L'ensemble crochet-verrou étant arrivé en position II intermédiaire (traits mixtes) le berceau s'enclenche en 1b automatiquement et simultanément sur les deux éléments de l'ensemble précité puis revient à la position 1 en 1c sous les actions de son propre poids et du ressorts de rappel 15.

Le verrouillage du berceau, connu en soi, est réalisé par la rotation de la tige filetée 7 qui translate le corps 9 du verrou vers le haut, contre le renfort de plancher 18.

Simultanément, la tringle du berceau 1 suit le profil intérieur 22 du crochet de sécurité pour le relever automatiquement vers la position III en 1d (traits pleins) en comprimant le ressort 15.

Ainsi, le crochet 12 s'efface sous le plancher 5, inapparent et protégé des chocs par la présence de la jupe arrière 26 de la carrosserie.

Le déverrouillage du berceau 1 procède des mouvements inverses du crochet et du verrou, les ramenant simultanément en position I.

La libération du berceau est effectuée manuellement en poussant sur le crochet 12 seul suivant la flèche F.

En cas de rupture brusque du verrou 6, le crochet 12 étant constamment en appui contre le berceau 1 sous l'effet de tension du ressort 15, le mouvement de chute du berceau ramène automatiquement le crochet de sécurité dans la position I permettant la retenue du berceau.

**Revendications**

1. Dispositif de sécurité pour la retenue d'un berceau de roue de secours monté pivotant sous le plancher d'un véhicule automobile et manoeuvré, de l'intérieur du coffre à bagages par un verrou associé à un crochet de sécurité monté sur une partie fixe de la carrosserie et rappelé par un organe élastique, caractérisé en ce que le crochet de sécurité (12) est susceptible de s'escamoter sous le plancher (5) par le relevage du berceau (1) à l'aide du verrou (6).

2. Dispositif de sécurité selon la revendication 1, caractérisé en ce que le crochet (12) présente un profil intérieur (22) en forme de came coopérant avec la tringle du berceau (1) et comprend un ressort de rappel enroulé autour de son pivot (14) en prenant appui, d'une part, sur la carrosserie fixe (18) et, d'autre part, sur le crochet (12).

3. Dispositif de sécurité selon les revendications 1 ou 2, caractérisé en ce que le support (13) forme une double chape en S dont la première (13a, 13b) supporte l'articulation du crochet 12 et dont la deuxième (13b, 13c) maintient en rotation et guide en translation le verrou (6) adjacent au crochet.

4. Dispositif de sécurité selon les revendications 1 à 3, caractérisé en ce que l'extrémité du crochet (12) présente une palette (23) à l'équerre engageant l'extrémité (10) du verrou en position basse pour permettre un léger basculement de l'ensemble et la libération du berceau (1) ou son enclenchement automatique.

**Patentansprüche**

1. Sicherheitsvorrichtung zum Festhalten eines Haltebügels für ein Reserverad, der schwenkbar unterhalb des Bodens eines kraftfahrzeuges angeordnet ist und vom Inneren des Kofferraums aus mittels eines mit einem Sicherheitshaken zusammenwirkenden Riegels betätigbar ist, wobei der Sicherheitshaken an einem feststehenden Teil der Karosserie angeordnet ist und unter der Rückholwirkung eines elastischen Teils steht, dadurch gekennzeichnet, daß der Sicherheitshaken (12) durch Anheben des Bügels (1) mittels des Riegels (6) unter den Boden (5) zurückklappbar ist.

2. Sicherheitsvorrichtung nach Anspruch 1, dadurch gekennzeichnet, daß der Haken (12) ein nockenförmiges Innenprofil (22) aufweist, welches mit dem Vorderteil des Bügels (1) zusammenwirkt und daß auf der Schwenkachse (14) des Hakens eine Rückholfeder angeordnet ist, die sich einerseits am feststehenden Karosserieteil (18) und andererseits am Haken (12) abstützt.

3. Sicherheitsvorrichtung nach Ansprüchen 1 oder 2, dadurch gekennzeichnet, daß sie eine aus zwei Teilen bestehende, S-förmige Halterung (13) aufweist, in deren ersten Teil (13a, 13b) der Haken (12) angelenkt ist und in deren zweiten Teil (13b, 13c) der dem Haken benachbarte Riegel (6) drehbar und längsverschieblich angeordnet ist.

4. Sicherheitsvorrichtung nach Ansprüchen 1 bis 3, dadurch gekennzeichnet, daß das Ende des Hakens (12) eine winkelförmige Platte (23) aufweist, in die im abgesenkten Zustand das Ende (10) des Riegels eingreift um so eine geringe Verschwenkung der Gesamtanordnung und damit ein Ausrücken oder automatisches Einschnappen des Bügels (1) zu ermöglichen.

## Claims

1. A safety device for retaining a spare wheel cradle which is mounted pivotally under the floor of a motor vehicle and which is operated from the interior of the luggage boot by a lock means associated with a safety hook member mounted on a fixed part of the bodywork and returned by a resilient member, characterised in that the safety hook member (12) is capable of being retracted below the floor (5) by raising of the cradle (1) by means of the lock means (6).

2. A safety device according to claim 1 characterised in that the hook member (12) has an inside profile (22) in the form of a cam, cooperating with the rod of the cradle (1), and comprises a return spring coiled abouts its pivot (14), bearing on the one hand against the fixed bodywork (18) and on the other hand on the hook member (12).

3. A safety device according to claim 1 or claim 2 characterised in that the support member (13) forms a double S-shaped strap member of which the first (13a, 13b) supports the pivot of the hook member (12) and the second (13b, 13c) holds for rotary movement and guides for translatory movement the lock means (6) adjacent to the hook member.

4. A safety device according to claims 1 to 3 characterised in that the end of the hook member (12) has a blade member 23 at right angles engaging the end (10) of the lock means in the low position to permit a slight rocking movement of the assembly and liberation of the cradle (1) or automatic engagement thereof.

0 001 725

Fig - 1

Fig - 2

FIG.3

0 001 725

FIG. 4

0 001 725

FIG. 5